# EUROPÄISCHE PATENTSCHRIFT

(11) **EP 0 529 501 B1**
(45) Veröffentlichungstag und Bekanntmachung des Hinweises auf die Patenterteilung: **02.11.1995**
(21) Anmeldenummer: 92114149.5
(22) Anmeldetag: 19.08.1992
(51) Int. Cl.: B60R 22/18

(54) **Rückstrammervorrichtung zum Straffen eines Sicherheitsgurtes in einem Kraftfahrzeug**
Back tensioning device for tensioning of a safety belt in a motor vehicle
Dispositif de tendeur de rappel pour tendre une ceinture de sécurité d'un véhicule automobile

(30) Priorität: 23.08.1991 DE 4127958; 09.01.1992 DE 4200360
(43) Veröffentlichungstag der Anmeldung: 03.03.1993
(73) Patentinhaber: HS Technik und Design Technische Entwicklungen GmbH, 82234 Wessling (DE)
(72) Erfinder: Specht, Martin, Dipl.-Ing.(FH), W-8133 Feldafing (DE)
(74) Vertreter: Nöth, Heinz, Dipl.-Phys.

(56) Entgegenhaltungen:
- EP-A- 0 306 299
- DE-A- 3 234 422
- DE-A- 3 327 970
- GB-A- 2 220 128

## Beschreibung

Die Erfindung betrifft eine Rückstrammervorrichtung nach dem Oberbegriff des Patentanspruches 1.

Eine derartige Rückstrammervorrichtung ist aus GB-A-2 220 128 bekannt, wobei das Druckrohr, welches zur Führung des Projektils dient, fest in einem fahrzeugseitigen Rahmen eingespannt ist und die eine Pendelmasse aufweisende Sensormasse getrennt vom Druckrohr angeordnet ist. Durch die Rückstrammervorrichtung wird im Crashfall der Sicherheitsgurt gestrafft, so daß eine Gurtlose beseitigt wird oder ein Filmspuleffekt durch locker aufgewickelte Gurtbandlagen vermieden wird.

Aus EP-A-306 299 ist eine Rückstrammervorrichtung bekannt, bei welcher ein Druckmediumbehälter als Kraftspeicher und Sensormasse dient. Beim Freisetzen des Druckmediums wird der Druckbehälter in einem an der Fahrzeugseite fest eingespannten Druckrohr zum Straffen des Sicherheitsgurtes geführt. Das Druckrohr, in welchem der angetriebene Druckmediumbehälter beim Straffen geführt wird, ist unbeweglich mit einem Fahrzeugteil verbunden.

In der älteren, jedoch nach veröffentlichten EP-A-505 823 ist eine Rückstrammervorrichtung mit den Merkmalen des Oberbegriffes des Patentanspruches 1 und einem zur Sensormasse gehörigen beweglichen Druckrohr, in welchem das Projektil geführt wird, beschrieben. Jedoch ist der Schlagbolzen und der diesen Schlagbolzen betätigende Zündmechanismus an einem fahrzeugfesten Gehäuse gelagert.

Aufgabe der Erfindung ist es, eine Vorrichtung zum Straffen des Sicherheitsgurtes in einem Kraftfahrzeug der eingangs genannten Art zu schaffen, bei welchem in einer kompakten Anordnung das Ansprechen der Sensoreinrichtung bis zur Umsetzung des vom Treibgas aufgebauten Druckes in die zur Gurtstraffung erforderliche Bewegungsenergie in einem kurzen Zeitabstand erfolgt.

Diese Aufgabe wird erfindungsgemäß durch die Merkmale des Patentanspruches 1 gelöst.

Als Zündmechanismus dient bei einer Ausführungsform eine Kartusche und ein Schlagbolzen, die nach Freigabe der Sperreinrichtung mittels einer Feder aufeinander zu bewegbar sind und bei einer anderen Ausführungsform aus eine Kartusche, auf die nach Auslösung ein mittels einer Anschlagfeder vorgespannter Anschlaghebel, nach der Freigabe der als Fixierbolzen bzw. Anschlag ausgeführten Sperreinrichtung, schlägt. Der Zündmechanismus ist in beiden Fällen in einem am Druckrohr angeformten Zündgehäuse angeordnet und der Zündgehäuse-Innenraum über einen Gaskanal mit dem Druckrohr verbunden.

Das Druckrohr kann in Richtung seiner Längsausdehnung beweglich in einem Gehäuse geführt sein.

Eine weitere Möglichkeit besteht darin, daß das Druckrohr in einem Gehäuse um eine Pendelachse drehbar gelagert ist.

Das Druckrohr kann mittels eines Sensorelementes (Sensorfeder) in eine Stellung gedrückt sein, in welcher die Sperreinrichtung eine den Treibsatz enthaltende Kartusche vom Schlagbolzen gegen die Kraft einer Feder trennt. Im Druckrohr befindet sich ein Projektil mit an ihm befestigten Zugseil, das den einen Teil des Druckrohres, der den Treibsatz enthält, vom anderen Teil, in welchem das Projektil treibbar ist, gasdicht trennt.

In vorteilhafter Weise ist der Treibsatz in einer am Ende des Druckrohres befestigten Kartusche angeordnet, und das Projektil ist auf die Kartusche aufgesetzt. Da das Projektil sich axial zum Druckrohr bewegt und auch die Kartusche in axialer Richtung im Druckrohr ausgerichtet ist, wirkt der Treibsatz direkt auf das Projektil in der Bewegungsrichtung, d.h. in der axialen Richtung des Druckrohres, in welcher auch das Zugmittel, welches bevorzugt als Zugseil ausgebildet ist, mit bewegt wird.

Das Druckrohr ist zusammen mit dem eingesetzten Treibsatz und dem Projektil als Pendelmasse für eine noch zu erläuternde Sensoreinrichtung ausgebildet. Diese Pendelmasse, d.h. bevorzugt das Druckrohr, ist an einer fahrzeugseitig gelagerten Pendelachse schwenkbar gelagert. Die Sensormasse spricht auf Trägheitskräfte, die quer zur Längsrichtung der Sensormasse, d.h. quer zur Längsrichtung des Druckrohres, wirken, an. Diese Schwenkbewegung der Pendelmasse um die Pendelachse wird zum Auslösen einer Sensoreinrichtung ausgenützt, durch die die Freigabe der Zündung des Treibsatzes bewirkt wird.

Die Sensoreinrichtung enthält ein Sperrteil, das als Klinke ausgebildet sein kann. Dieses Sperrteil liegt an einem fahrzeugseitig ortsfesten Anschlag an und kann gegen die Kraft einer Sensorfeder durch die Pendelmassebewegung außer Angriff mit dem Anschlag gebracht werden Solange das Sperrteil am Anschlag anliegt, wird die Zündeinrichtung durch das Sperrteil in Bereitstellung gehalten.

Die Zündeinrichtung enthält bevorzugt einen schwenkbaren Zündhebel, der gegen die Kraft einer Zündfeder mit dem Sperrteil in Eingriff liegt, wenn das Sperrteil am fahrzeugseitigen festen Anschlag anliegt. Auf diese Weise wird der schwenkbare Zündhebel in Bereitschaft gehalten.

Wenn durch die Pendelbewegung der Pendelmasse das Sperrteil vom Anschlag gelöst ist, wirkt eine vom der am Zündhebel angreifenden Zündfeder verursachte Kraftkomponente an der Eingriffstelle zwischen Sperrteil und Zündhebel in der Weise, daß Sperrteil und Zündhebel voneinander getrennt werden. Hierzu können der Zündhebel und das Sperrteil schräge Anschlagflächen aufweisen, die in Eingriffstellung aneinanderliegen. Bei vom Anschlag gelösten Sperrteil gleiten die beiden schräg verlaufenden Anschlagflächen aneinander unter dem Einfluß der von der Zündfeder erzeugten Kraftkomponenten im Sinne einer Auseinanderbewegung von Zündhebel und Sperrteil.

Sowohl der Zündhebel als auch das Sperrteil können schwenkbar am Druckrohr gelagert sein.

Es wird durch diese Anordnung von Sensoreinrichtung und Zündeinrichtung sowie Treibsatz mit dem Projektil eine kompakte Anordnung erzielt, wobei kurze Wege und Reaktionszeiten zwischen der Auslösung der Sensoreinrichtung aufgrund der Pendelmassebewegung bis zum Zünden des Treibsatzes, welcher unmittelbar in Bewegungsrichtung des Projektils wirkt, erreicht werden.

In vorteilhafter Weise erfolgt in anderer Form die Auslösung des pyrotechnischen Treibsatzes dadurch, daß die mit einer Druckfeder vorgespannte Kartusche bei entsprechender Beschleunigung, d.h. entsprechender Abbremsung des Fahrzeuges freigegeben wird und diese gegen einen fest im Raum, der die Kartusche enthält, hineinragenden Schlagbolzen schlägt. Die durch die Detonation des Treibsatzes entstehenden Gase gelangen durch einen im Druckrohr im Inneren des Druckrohres befindlichen Gaskanal und treiben das Projektil im Druckrohr in die Richtung, in die das Zugseil bewegt werden muß, um eine ausreichende Vorspannung des Gurtsystems zu erreichen.

Die Sperreinrichtung, die die Kartusche fixiert, kann hierbei in verschiedener Form ausgeführt sein. Zum einen kann es sich um eine Kugel handeln, die in einer Bohrung des Druckrohres an der entgegengesetzt zum Sensorelement liegenden Seite des Druckrohres vorhanden ist und gleichzeitig gegen die Gehäusewand und die Oberkante der vorgespannten Kartusche drückt. Es kann aber auch z.B. eine schräg angeformte Fläche der Gehäuse-Innenwandung sein oder eine kegelförmig angespitzte Schraube, die durch die Gehäuse-Innenwand in die Bohrung des Druckrohres ragt und in gleicher Weise wie die Kugel die vorgespannte Kartusche sperrt.

Auf der gegenüberliegenden Seite befindet sich ein Sensorelement, das eine Feder oder ein Sollbruchelement sein kann. In beiden Fällen sind sie so ausgelegt, daß sie bei einem entsprechend hohen Beschleunigungswert eine Freigabe der Sperreinrichtung ermöglichen und die Kartusche gegen den Schlagbolzen gedrückt wird.

Ist der Gurt vollständig aufgerollt, ragt eine Sperrklinke in den Raum zwischen Druckrohr und Gehäuse auf der Seite, an der sich das Sensorelement befindet, so daß eine Bewegung des Druckrohres und somit eine Freigabe der Sperreinrichtung ausgeschlossen ist. Wird der Gurt nur teilweise abgerollt oder das Gurtschloß geschlossen, gibt diese Sperrklinke die Bewegung frei, so daß das ganze System aktiviert ist.

Vorteilhaft ist das Druckrohr auch bei dieser Ausführungsform an dem Ende, welches von der Sperreinrichtung und dem Sensorelement (Sensorfeder) entfernt liegt, drehbar um die Pendelachse. Der Drehbewegung wirkt das am anderen Ende des Druckrohres angeordnete Sensorelement entgegen. Ist die Beschleunigungskraft so groß, daß das Sensorelement nachgibt, wird die Sperreinrichtung freigegeben und die Kartusche und der Schlagbolzen aufeinander zu bewegt. Das beim Zünden freiwerdende Gas des Treibsatzes strömt durch den Gaskanal und treibt das Projektil durch das Druckrohr. Dabei wird das Zugseil mitgenommen und das Straffen des Sicherheitsgurtes erreicht. In ausreichendem Abstand ist eine Brems- und Stoppeinrichtung vorhanden, die das Projektil aufhält. Günstigerweise kommt dafür eine Verengung im Druckrohr in Frage.

Durch die geringe Anzahl mechanisch beweglicher Einzelteile ist der Montageaufwand begrenzt.

Das ausschließlich mechanisch wirkende System ist störunempfindlich und unabhängig vom elektrischen Bordnetz.

Mit einem Projektil, das in seinem Innenraum einen den Treibsatz enthaltenden Gasgenerator aufweist, wird nach gezündetem Treibsatz im Innenraum des Projektils ein Druckgas erzeugt, das durch eine oder mehrere Düsenöffnungen für den Projektilantrieb austritt. Die Düsenöffnungen können hierzu in einen gasdicht abgeschlossenen Druckraum münden, der im Druckrohr gebildet ist, welches als Führung für das Projektil dient.

In vorteilhafter Weise können das Druckrohr und/oder das Projektil ein Bestandteil bzw. Bestandteile einer trägen Sensormasse sein, die aufgrund einer Crashbelastung (überhöhte Fahrzeugbeschleunigung bzw. -abbremsung) sich bewegt und dadurch eine Sperre löst, welche die Zündeinrichtung des Gasgenerators im normalen Fahrbetrieb des Kraftfahrzeugs blockiert (Ruhestellung).

Bei gelöster Sperre wird eine Relativbewegung zwischen einem Teil der Zündeinrichtung, die am Gasgenerator in Form einer Zündplättcheneinrichtung vorgesehen ist, und einem weiteren Teil der Zündeinrichtung, beispielsweise in Form eines Schlagbolzens, herbeigeführt. Diese Bewegung kann durch eine Feder im Innenraum des Projektils erzeugt werden. Bei einem bevorzugten Ausführungsbeispiel wird durch die Feder der Gasgenerator gegen den am Projektil befestigten Schlagbolzen bewegt, so daß das Treibgas gezündet wird. Das Treibgas baut im Innenraum des Projektils einen Überdruck auf, der durch die Düsenöffnung bzw. Düsenöffnungen in den Druckraum entweicht, so daß das Projektil zusammen mit dem am Projektil gasdicht verankerten Zugseil die Gurtstrafferbewegung herbeiführt.

Anhand der Figuren werden Ausführungsbeispiele der Erfindung noch näher erläutert. Es zeigt:
- Fig. 1: im Schnitt eine Seitenansicht einer Ausführungsform in Bereitstellung;
- Fig. 2: das Ausführungsbeispiel der Fig. 1 bei ausgelöster Sensoreinrichtung und betätigter Zündeinrichtung, wobei nur die Sensoreinrichtung und die Zündeinrichtung dargestellt sind;
- Fig. 3: in schnittbildlicher Darstellung eine Draufsicht auf das Ausführungsbeispiel nach Fig. 1;
- Fig. 4: eine Schnittdarstellung eines weiteren Ausführungsbeispieles einer Rückstrammervorrrichtung;
- Fig. 5: einen Teilschnitt einer dritten Ausführungsform;
- Fig. 6: eine vierte Ausführungsform;
- Fig. 7: eine fünfte Ausführungsform;
- Fig. 8: eine sechste Ausführungsform;
- Fig. 9: eine siebte Ausführungsform;
- Fig. 10: eine achte Ausführungsform;
- Fig. 11: ein Ausführungsbeispiel der Erfindung im Längsschnitt;
- Fig. 12: einen Gasgenerator, welcher im Ausführungsbeispiel der Fig. 1 verwendet werden kann;
- Fig. 13: eine gegenüber dem Ausführungsbeispiel der Fig. 1 modifizierte Ausführungsform der Sperre;
- Fig. 14: eine weitere modifizierte Ausführungsform für eine Sperre;
- Fig. 15: eine weitere Ausführungsform einer Rückstrammervorrichtung mit einer zusätzlichen Sensormasse im Längsschnitt; und
- Fig. 16: eine Ausführungsform mit zusätzlicher Sensormasse und spezieller Anordnung der Sensorfeder im Teilschnitt.

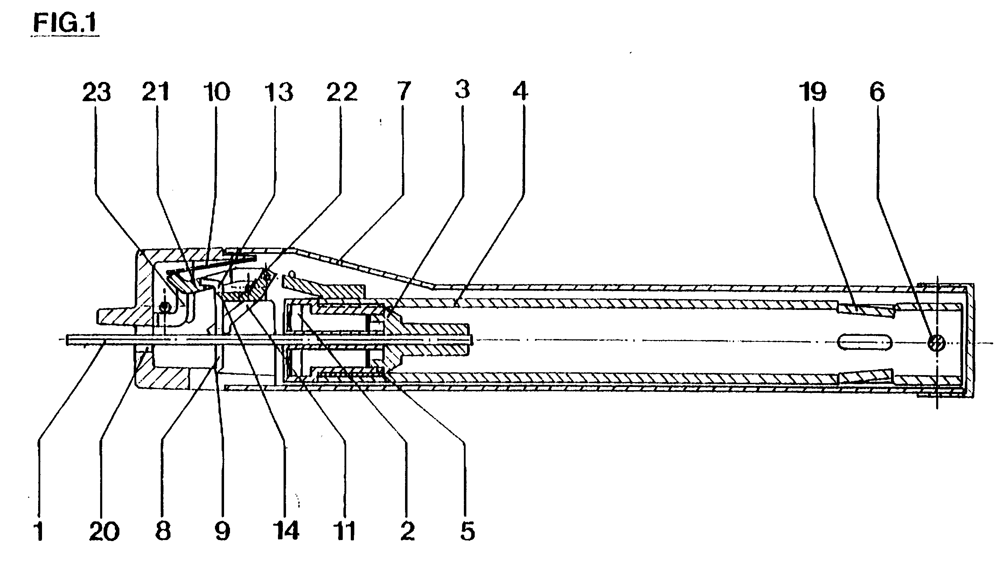

Das in den Fig. 1 bis 3 dargestellte Ausführungsbeispiel einer Rückstrammereinrichtung besitzt ein Gehäuse 7, in welchem ein Druckrohr 4 angeordnet ist. Das Gehäuse 7 kann an einem Fahrzeugteil, beispielsweise an der B-Säule des Fahrzeugs, mit seiner Achse in vertikaler Anordnung befestigt werden. Das Druckrohr 4 ist im Gehäuse um eine Pendelachse 6 schwenkbar gelagert. Die Pendelachse 6 ist in Form eines Bolzens am Gehäuse 7 befestigt.

Das Druckrohr 4 ist an seinem einen Ende schwenkbar um die Pendelachse 6 im Gehäuse 7 gelagert. Am anderen Ende des Druckrohres 4 befindet sich ein pyrotechnischer Treibsatz 2 in einer Kartusche 5. Die Kartusche 5 kann eingepreßt, eingeschaubt oder sonstwie in geeigneter Weise am Ende des Druckrohres 4 befestigt sein. Die Kartusche, in welcher der Treibsatz 2, welcher in bekannter Weise ausgebildet ist, untergebracht ist, bildet den Endabschluß des Druckrohres 4. Der Treibsatz 2 beinhaltet in bekannter Weise eine Zündhütcheneinrichtung, die, wie im einzelnen noch erläutert wird, durch einen Schlagbolzen 11 gezündet werden kann. Die entsprechende Endfläche der Kartusche 5 liegt im Schwenkbereich des Schlagbolzens 11 als Zündelement.

Am anderen Ende der Kartusche 5 ist ein Projektil 3 aufgesetzt. Mit dem Projektil 3 ist ein Zugseil als Zugmittel 1, das mit dem Sicherheitsgurt in bekannter Weise verbunden ist, fest verbunden. Das Zugseil 1 ist durch die Kartusche 5 gasdicht hindurchgeführt und ist durch eine Öffnung 20 aus dem Gehäuse 7 herausgeführt und in bekannter Weise mit dem Sicherheitsgurt verbunden. Das Zugseil und das Projektil 3 sowie die Kartusche 5 und der in der Kartusche angeordnete Treibsatz 2 sind in axialer Richtung des Druckrohres 4 ausgerichtet.

Die Sensoreinrichtung beinhaltet ein als Klinke ausgebildetes Sperrteil 8, das mit Hilfe eines am Druckrohr 4 vorgesehenen Halters 21 schwenkbar am Druckrohr 4 gelagert ist. Die Schwenkachse des Sperrteils 8 befindet sich am einen Ende des Sperrteils 8. In Ruhestellung bzw. in Bereitschaftstellung liegt das Sperrteil 8 mit seinem anderen Ende an einem Anschlag 9, der an der Innenseite desGehäuses 7 vorgesehen ist, an. Mit dem Sperrteil 8 steht der Schlagbolzen 11, welcher ebenfalls am Halter 21 schwenkbar gelagert ist, in Eingriff. Hierzu ist an den Schlagbolzen 11 ein Eingriffsteil 22 angeformt. Das Eingriffsteil 22 besitzt eine abgeschrägte Anschlagfläche 14, die mit einer ebenfalls schräg verlaufenden, gegebenenfalls noch abgerundeten Anschlagfläche 13, in der in Fig. 1 dargestellten Bereitschaftstellung in Eingriff steht. An der Eingriffstelle zwischen den Anschlagflächen 13 und 14 wirkt eine Kraftkomponente einer Zündfeder 12, mit welcher der Schlagbolzen 11 in Schlagrichtung auf die Zündeinrichtung des Treibsatzes 2 hin geschwenkt werden kann. Bei der in der Fig. 1 dargestellten Bereitschaftstellung wird durch den Eingriff des Sperrteils 8 am Schlagbolzen 11 an der Eingriffstelle der Anschlagflächen 13 und 14 diese Zündbewegung des Schlagbolzens 11 gesperrt.

Die Sensoreinrichtung enthält ferner noch eine Sensorfeder 10, welche entgegengesetzt zur Schwenkrichtung der Pendelmasse bzw. des Druckrohres 4 um die Pendelachse 6 wirkt. Beim dargestellten Ausführungsbeispiel nach Fig. 1 greift die Sensorfeder 10 am Halter 21 an. Hierdurch wird die Pendelmasse, die Sensoreinrichtung und die Zündeinrichtung mit dem Schlagbolzen 11 in der in Fig. 1 dargestellten Bereitschaftstellung gehalten.

Im Crashfall wird die Pendelmasse und mithin das Druckrohr 4 um die Pendelachse 6 geschwenkt. Diese Schwenkbewegung erfolgt gegen die Kraft der Sensorfeder 10. Hierbei kommt der Sperrhebel 8 außer Eingriff mit dem Anschlag 9. Aufgrund der Kraftkomponenten, welche an der Eingriffstelle zwischen Schlagbolzen 11 und Sperrteil 8 im Bereich der Anschlagflächen 13und 14 wirkt, werden der Schlagbolzen 11 und das Sperrteil 8 voneinander entfernt, so daß aufgrund der Wirkung der Zündfeder 12 der Schlagbolzen 11 auf die Zündeeinrichtung des Treibsatzes 2 geschwenkt und geschlagen wird. Bei Zündung des Treibsatzes 2 expandiert dieser in den Expansionsraum der Kartusche 5 und wirkt auf die Rückseite des Projektils 3, welches in axialer Richtung entlang dem Druckrohr 4 bewegt wird. Dabei wird eine Zugkraft auf das Zugseil 1 ausgeübt, und das Zugseil führt mit dem Projektil 3 eine Rückstrafferbewegung aus, wodurch die im Gurtband vorhandene Gurlose beseitigt wird.

Im Druckrohr 4 kann eine Brems- und Stoppeinrichtung 19 für das Projektil 3 vorgesehen sein. Beim dargestellten Ausführungsbeispiel handelt es sich um schräg nach innen gedrückte, gegebenenfalls ausgestanzte Rohrteile des Druckrohres 4.

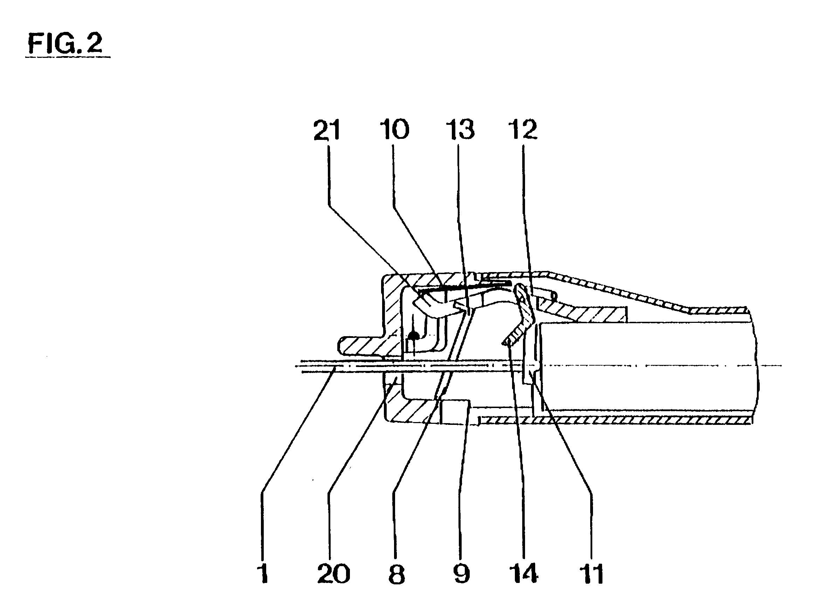

In der Fig. 2 ist der Schlagbolzen 11 in seiner Endstellung nach der Freigabe vom Sperrteil 8 dargestellt.

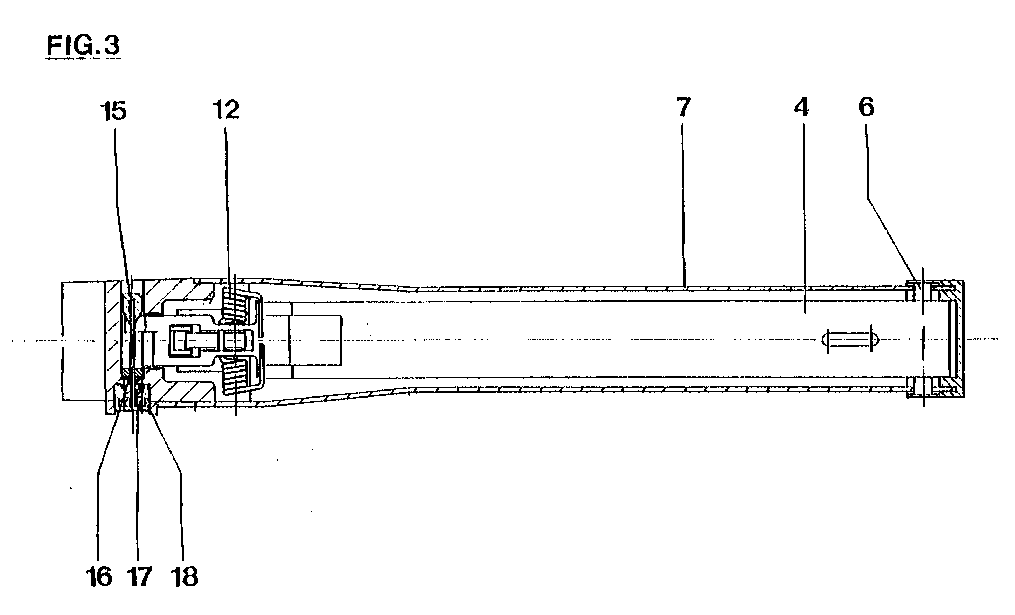

Wie aus Fig. 3 zu ersehen ist, enthält die Rückstrammervorrichtung noch eine Sicherheitseinrichtung, durch die vor der Endmontage der Rückstrammereinrichtung sichergestellt wird, daß die Sensoreinrichtung nicht ausgelöst wird und somit die Zündeinrichtung nicht gezündet wird. Diese Sicherheitseinrichtung enthält einen Verriegelungsstift 16, der an seinem einen Ende ein keilförmiges Verriegelungsteil 15 aufweist. In der Sicherungsstellung steht dieses Verriegelungsteil 15 in Eingriff mit einem Ansatzstück 23 am Halter 21. Der Sicherungsstift und das Verriegelungsteil 15 werden in die Verriegelungsposition durch eine Verriegelungsfeder 17 vorgespannt. Wenn das Gehäuse 7 der Rückstrammervorrichtung an einem Fahrzeugteil fest montiert wird, wird an der Montagestelle durch einen dort vorgesehenen Vorsprung über ein Betätigungsteil 18 entgegen der Kraft der Feder 17 der Verriegelungsstift 16 und das Verriegelungsteil 15 verschoben, so daß das Ansatzstück 23 freigegeben wird. Die Sensoreinrichtung und damit die Zündeinrichtung ist dann entsichert, und die Rückstrammervorrichtung ist dann betriebsbereit.

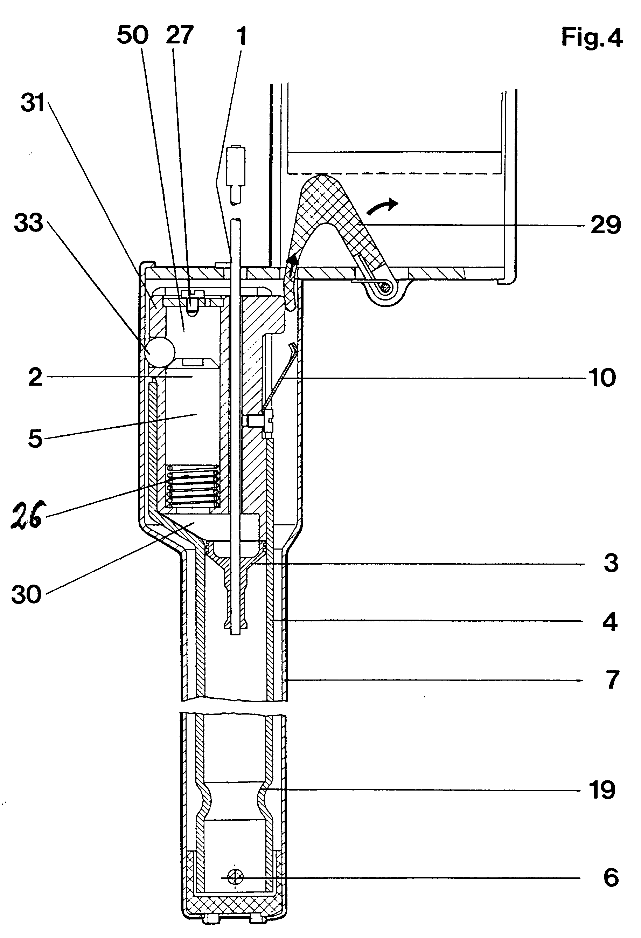

Die Fig. 4 zeigt eine Rückstrammervorrichtung. In einem an einem Holm des Kraftfahrzeuges in bevorzugt vertikaler Anordnung befestigbaren Gehäuse 7 ist ein am unteren Ende um eine Pendelachse 6 drehbar gelagertes Druckrohr 4 angebracht. Der obere Teil des Druckrohres 4 weist einen Raum 50 auf, in dem eine Kartusche 5 mit einem Treibsatz 2 aufgenommen ist, der im Normalzustand mit einer Druckfeder 26 vorgespannt ist. Entgegen der Kraftrichtung der Druckfeder ist ein Schlagbolzen 27 an der Oberseite des Raumes 50 starr befestigt. Die Kartusche 5 wird mit einer Sperreinrichtung (in diesem Fall eine Kugel 33) in vorgespanntem Zustand gehalten. Die Kugel 33 ragt durch eine Öffnung im Druckrohr in den Raum 50 und drückt gegen die Oberkante der Kartusche 5, so daß deren Bewegung in Richtung auf einen Schlagbolzen 27 verhindert wird. Die Kugel 33 wird im nicht ausgelösten Zustand der Rückstrammervorrichtung gegen die Wand des Gehäuses 7 gedrückt. Auf der gegenüberliegenden Seite des Druckrohres ist eine Sensorfeder 10 angebracht, die eine Bewegung des Druckrohres 4 in diese Richtung verhindert. In dieser Ausführungsform wird eine Blattfeder verwendet, deren Federkraft so ausgelegt ist, daß sie den normalen negativen Fahrzeugbeschleunigungen widersteht und eine Verdrehung des Druckrohres 4 um die Pendelachse 6 verhindert, so daß die Sperreinrichtung nach wie vor wirkt. Überschreitet die negative Kraftfahrzeugbeschleunigung einen vorher je nach Fahrzeugtyp spezifischen Wert, ist die Trägheitskraft des Druckrohres 4 größer als die Federkraft der Sensorfeder 10, so daß eine Bewegung des Druckrohres in Fahrtrichtung erfolgt, die Kartusche 5 freigegeben wird und mit der Druckfeder 26 gegen den Schlagbolzen 27 geschlagen wird. Nach Zündung des Treibsatzes 2 entweichen die freiwerdenden Gase durch den Raum 50 über den Gaskanal 30 und treiben das Projektil 3 in Richtung Pendelachse 6 und Brems- und Stoppeinrichtung 19. Dabei reißt das Projektil 3 das Zugseil 1 mit und bewirkt ein Straffen des Sicherheitsgurtes entsprechend der Länge der Bewegung des Projektiles 3.

Für eine größtmögliche Ausnutzung der Treibladung ist das Projektil 3 mit Dichtelementen in Form von Kolbenringabdichtungen versehen, die gleichzeitig eine ausreichende Führung im Druckrohr 4 gewährleisten.

Im Normalzustand, d.h. bei Fahrzeugsitzen, die nicht belegt sind, ist eine Sperrklinke 29 in dem Zwischenraum zwischen Druckrohr 4 und Gehäuse 7 eingerastet. Dadurch ist eine Auslösung der Rückstrammervorrichtung ausgeschlossen, da eine Bewegung des Druckrohres 4 verhindert wird. Bei Anlegen des Gurtes wird die Sperrklinke 29 betätigt und gibt die Bewegung frei, so daß als einziges einer Verdrehung des Druckrohres 4 entgegenstehendes Bauteil die Feder 10 verbleibt und die Rückstrammervorrichtung aktiviert ist.

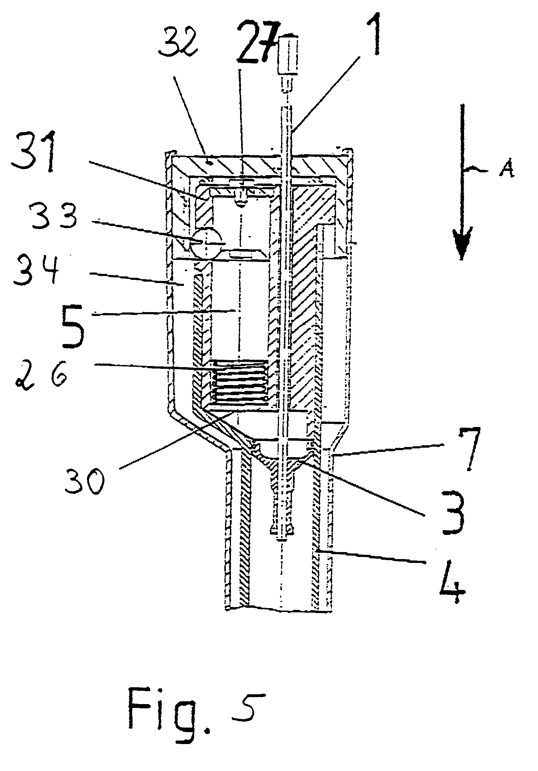

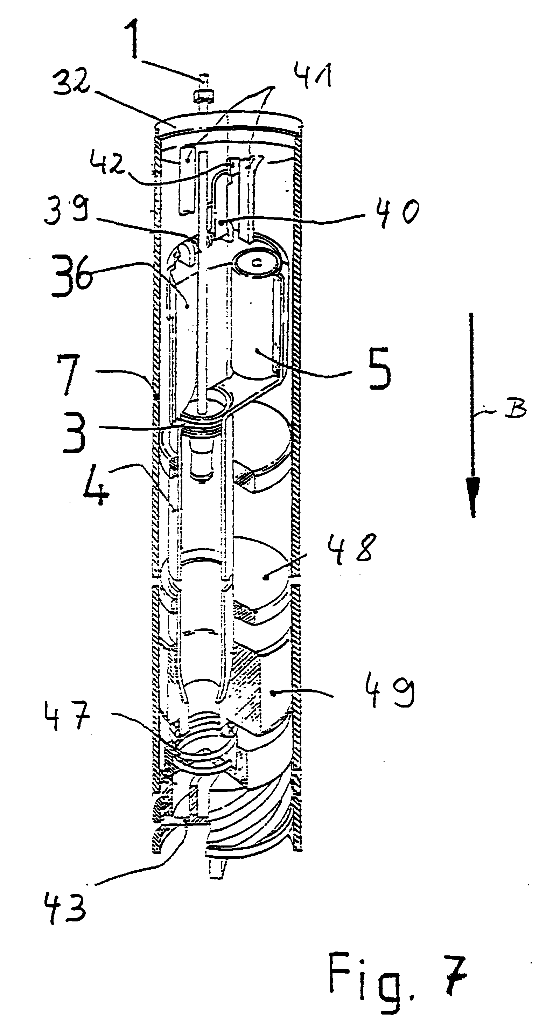

Aus der Darstellung gemäß Fig. 5 ist eine weitere Ausführungsform der erfindungsgemäßen Rückstrammervorrichtung erkennbar. Hierbei ist ein in einem Gehäuse 7 in Längsrichtung bewegbares Druckrohr 4 vorgesehen. Der Zündmechanismus besteht ebenfalls aus einer Druckfeder 26, einer Kartusche 5 und einem Schlagbolzen 27, die in einem Zündgehäuse 31 angeordnet sind. Die Kartusche 5 ist in dem Zündgehäuse 31 mittels der Druckfeder 26 vorgespannt und ist mit der Kugel 33 arretiert. In nicht ausgelöster Stellung der Rückstrammervorrichtung wird die Kugel 33 mittels der Oberkante der Kartusche 5 und eines entsprechend ausgebildeten Sensorkopfes 32 in einer Öffnung im Zündgehäuse 31 gehalten. Der in Fig. 5 eingezeichnete Pfeil A weist in Bewegungsrichtung des Druckrohres 4. In bevorzugter Weise ist dies auch die Fahrtrichtung des Kraftfahrzeuges. Das Druckrohr 4 wird mittels einer in dieser Darstellung nicht erkennbaren Sensorfeder, die z.B. wie in Figur 7 die Sensorfeder 47 ausgebildet sein kann, entgegen der Bewegungsrichtung A gedrückt, so daß eine Auslösung der Rückstrammervorrichtung im Normalbetrieb verhindert wird. Im Crashfall wird die Masse des Druckrohres 4 mit dem gesamten Zündmechanismus in die Bewegungsrichtung A gegen die nicht dargestellte Sensorfeder gedrückt. Die Kugel 33 wird nicht mehr durch den Sensorkopf 32 begrenzt und gleitet in den Raum 34 zwischen Zündgehäuse 31 und Gehäuse-Außenwand und gibt dabei die Bewegung der Kartusche 5 frei, wodurch die Druckfeder gegen den Schlagbolzen 27 gepreßt und dabei eine Zündung ausgelöst wird. Die bei der Detonation freiwerdenden Gase gelangen durch den Gaskanal 30 zum Projektil 3 und treiben dieses in Fahrtrichtung, so daß mittels des Zugseiles 1 die Gurtvorspannung erzielt wird.

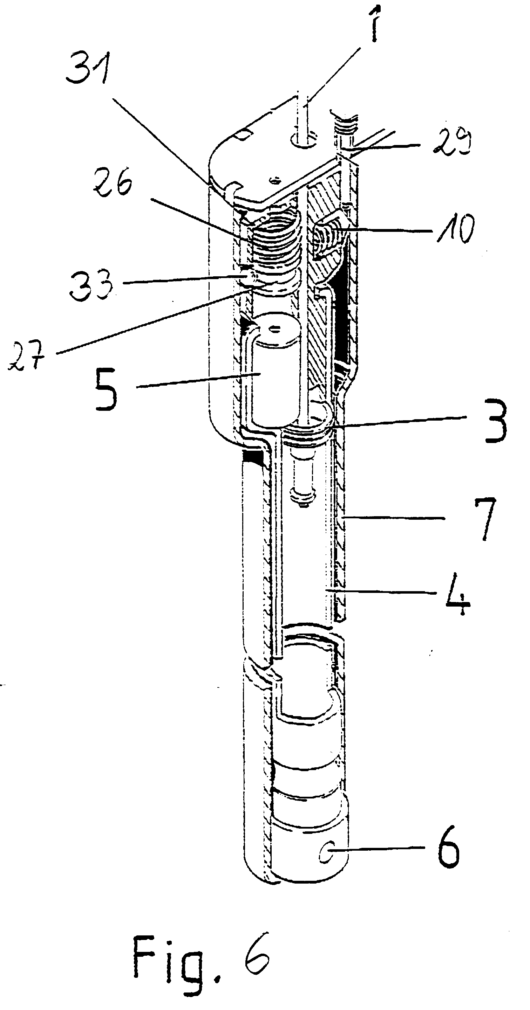

Bei der in Fig. 6 perspektivisch dargestellten Ausführungsform der Rückstrammervorrichtung ist das im Gehäuse 7 angebrachte Druckrohr 4 mit dem gesamten Zündmechanismus wie in Fig. 4 um eine Pendelachse 6 schwenkbar gelagert. Die Sensorfeder 10, die in diesem Falle eine Druckfeder ist, drückt das schwenkbare Ende des Druckrohres 4 in Richtung der Kugel 33. Der Zündmechanismus, der im Zündgehäuse 31 des Druckrohres 4 angeordnet ist, besteht aus der fest fixierten Kartusche 5, der Druckfeder 26 und dem in diesem Falle beweglichen Schlagbolzen 27, der in nicht ausgelöstem Zustand mittels der Kugel 33 festgehalten ist. Beim Einwirken einer entsprechenden Beschleunigung bzw. Abbremsung (Crashfall) wird das Druckrohr 4 gegen die Kraft (Federkraft) der Sensorfeder 10 gedrückt und bewegt sich in diese Richtung. Dabei gibt die Kugel 33 den Schlagbolzen 27 frei, und dieser schlägt auf die Kartusche 5 und löst die Zündung des Treibsatzes aus. Die dabei freiwerdenden Gase treiben das Projektil 3 mit dem an ihm befestigten Zugseil 1 und bewirken die Straffung des Sicherheitsgurtes.

Ein nicht erwünschtes Auslösen der Rückstrammervorrichtung wird mittels der Sperrklinke 29 verhindert, wenn der Fahrzeugsitz nicht belegt ist. Die Sperrklinke 29 verhindert die Bewegung des Druckrohres 4, so daß eine Freigabe des Schlagbolzens 27 nicht möglich wird. Die Aktivierung erfolgt wie bei Fig. 4 schon beschrieben.

Eine fünfte Ausführungsform der Rückstrammervorrichtung ist in Fig. 7 dargestellt. In einem Gehäuse 7, das in der einen Längsrichtung mittels eines Sensorkopfes 32 und in der anderen Längsrichtung mittels eines Verschlußdeckels 43 verschlossen ist, befindet sich ein Sensorträger 36 und ein an diesen angeschlossenes Druckrohr 4. Das Druckrohr 4 wird mittels Lagern 48 und 49 in seiner Längsrichtung (Pfeil B) beweglich geführt. Im Sensorträger 36 ist eine Kartusche 5 fest installiert. An der Oberkante des Sensorträgers 36 ist auf einer Welle eine Aufschlagfeder 39 vorhanden, deren Kraft auf einen Aufschlaghebel 40 als Schlagbolzen wirkt. Im nicht ausgelösten Zustand der Rückstrammervorrichtung, d.h. im Normalbetrieb, verhindern an der Innenwand des Gehäuses befestigte Fixierbolzen 41, von denen einer einen Anschlag 42 aufweist, ein Aufschlagen des Aufschlaghebels 40 auf den Treibsatz der Kartusche 5. Der Aufschlaghebel 40 liegt gegen den Anschlag 42 an. Der Sensorträger 36 mit dem angeschlossenen Druckrohr 4 wird in diesem Zustand mittels der Sensorfeder 47 in Richtung des Sensorkopfes 32 entgegen der bevorzugt in Fahrzeugfortbewegungsrichtung liegenden Bewegungsrichtung des Druckrohres (Pfeil B) gehalten. Wirkt auf das Kraftfahrzeug eine überhöhte Beschleunigung bzw. Abbremsung (Crashfall), wird der Sensorträger 36 mit dem Druckrohr 4 und dem gesamten Zündmechanismus in Richtung des Pfeiles B gegen die Sensorfeder 47, die sich am Verschlußdeckel 43 abstützt, bewegt. Dabei gibt der Anschlag den Aufschlaghebel 40 frei, der durch die Wirkung der Aufschlagfeder 39 auf den Treibsatz der Kartusche 5 schlägt. Die bei der Zündung freiwerdenden Treibgase bewegen das Projektil 3 mit dem an diesem befestigten Zugseil 1 im Druckrohr 4 und bewirken die gewünschte Strafferbewegung für den Sicherheitsgurt.

Mit dem auf dem Verschlußdeckel 43 aufgebrachten Außengewinde kann die gewünschte Sensorkraft durch Vorspannung der Sensorfeder 47 in gewissen Grenzen eingestellt werden.

Die Lager 48, 49 sind so ausgeführt, daß eine leichte Bewegung des Druckrohres 4 im Gehäuse 7 in dessen Längsrichtung möglich ist.

In einfacher Weise ist ein Austausch der gesamten im Gehäuse 7 untergebrachten Einzelteile nach einer Auslösung der Rückstammervorrichtung möglich, indem der Verschlußdeckel 43 abgeschraubt wird und ein völlig neuer bzw. neubestückter Sensorträger eingebaut werden kann.

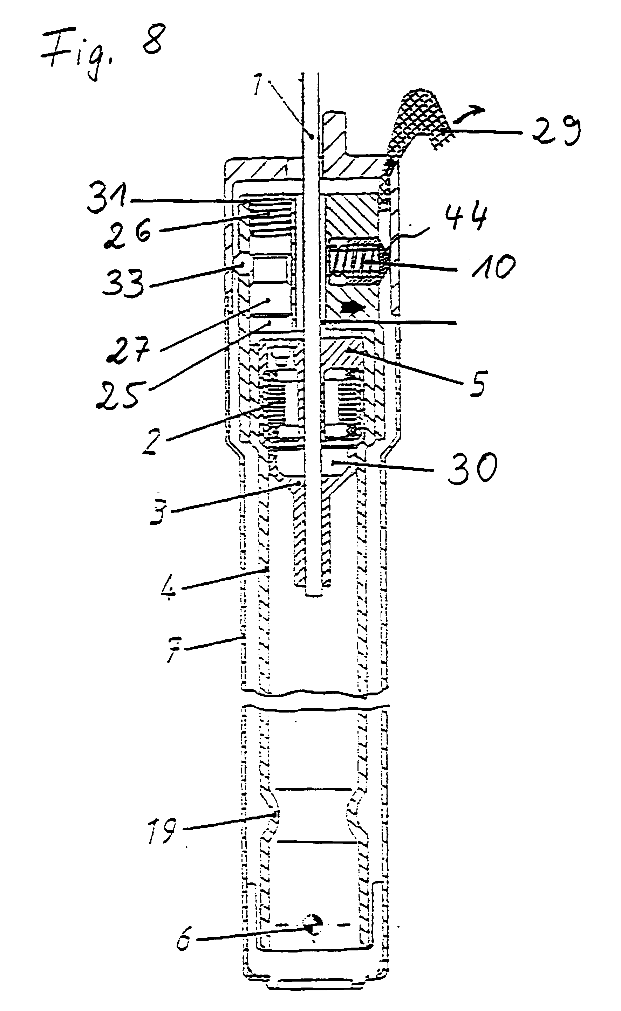

Bei den in den Figuren 8, 9 und 10 dargestellten Ausführungsbeispielen handelt es sich um Rückstrammervorrichtungen, bei denen das Druckrohr 4 ebenfalls um eine Pendelachse 6 verschwenkbar im Gehäuse 7 angeordnet ist. Der Zündmechanismus befindet sich wie bei dem in Fig. 4 dargestellten Ausführungsbeispiel in dem Zündgehäuse 31. Das Zündgehäuse 31 ist mit dem Ende des Druckrohres 4 verbunden, das dem Ende des Druckrohres entgegengesetzt liegt, an welchem die Pendelachse 6 vorgesehen ist.

Bei den drei Ausführungsbeispielen der Figuren 8, 9 und 10 wird die Sensoreinrichtung im wesentlichen gebildet durch die Sensorfeder 10.

Beim Ausführungsbeispiel der Fig. 8 stützt sich die Sensorfeder 10 über eine Druckhülse 44, in welcher die Sensorfeder 10 gehalten ist, gegen den Innenwandteil des Gehäuses 7 ab, welcher der Sperreinrichtung in Form der Kugel 33 gegenüberliegt.

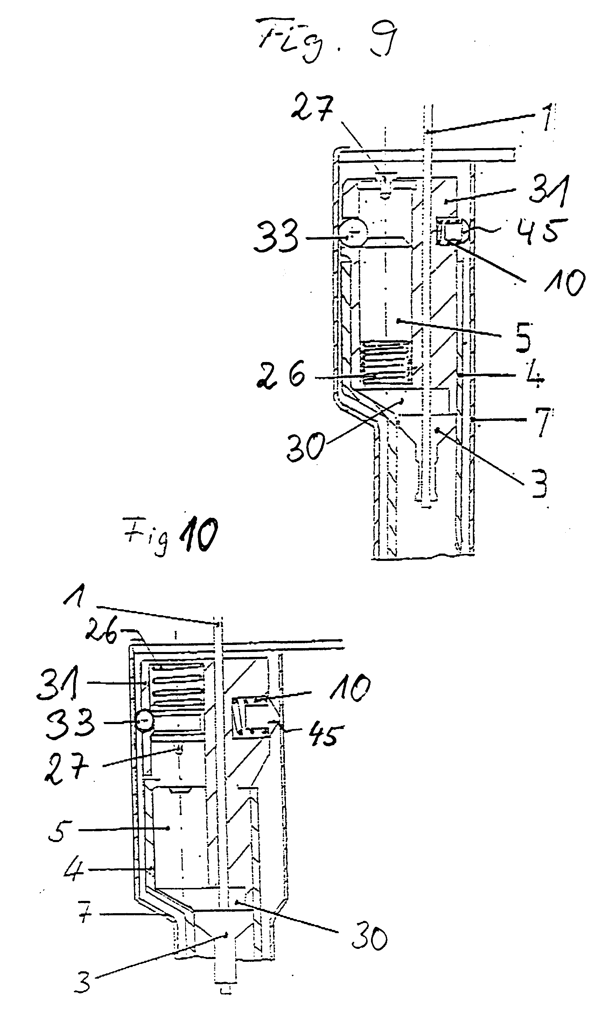

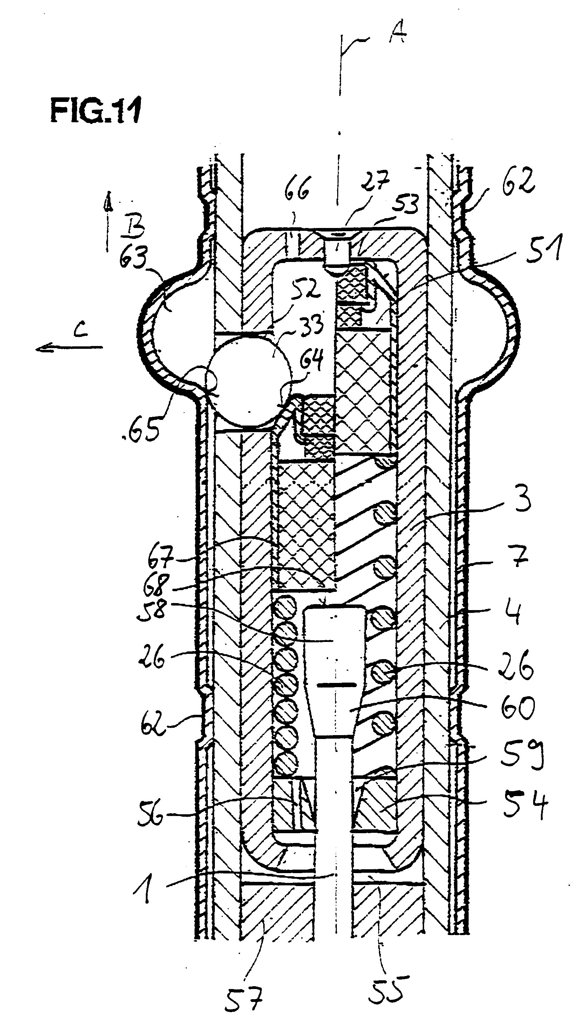

Bei den Ausführungsbeispielen der Figuren 9 und 10 stützt sich die Sensorfeder 10 über einen Druckbolzen 45 mit halbkugelförmigem Kopf (Fig. 9) und Druckbolzen 45 mit kegelförmigem Druckkopf (Fig. 10) an dem Innenwandteil des Gehäuses 7 ab, welcher der Kugel 33 gegenüberliegt.

Bei den Ausführungsbeispielen der Figuren 8 und 10 wird - wie beim Ausführungsbeispiel der Fig. 6 - der von der Druckfeder 26 beaufschlagte Schlagbolzen 27 durch die Kugel 33, welche in einer Ausnehmung gehalten ist und sich an der Innenwand des Gehäuses 7 abstützt, in der Ruheposition gehalten.

Beim Ausführungsbeispiel der Fig. 9 wird - wie beim Ausführungsbeispiel der Fig. 4 - die von der Druckfeder 26 beaufschlagte Kartusche 5 durch die Kugel 33 in der Ruheposition gehalten. Das Zünden des Treibsatzes erfolgt in der gleichen Weise wie bei den Ausführungsbeispielen der Figuren 4 und 6.

Bei den Ausführungsbeispielen der Figuren 4, 6 und 8 bis 10 erfolgt - wie schon erläutert - die Anordnung der Rückstrammervorrichtung bevorzugt in vertikaler Anordnung im Kraftfahrzeug, wobei die Schwenkbewegung des Druckrohres 4 um die Pendelachse 6 entgegengesetzt zur Vorwärtsfahrtrichtung des Kraftfahrzeuges liegt. Es ist natürlich auch möglich, andere Anordnungen der Rückstrammervorrichtung im Kraftfahrzeug vorzunehmen, wenn andere Krafteinwirkungsrichtungen während eines Crashfalles erfaßt werden sollen. Dies gilt auch für die Ausführungsformen der Figuren 5 und 7, bei denen sich die Längsrichtung des Druckrohres 4 in Fahrtrichtung des Kraftfahrzeuges erstreckt. Wenn mit diesen Ausführungsformen auch andere Krafteinwirkungsrichtungen während eines Crashfalles erfaßt werden sollen, wird die Rückstrammervorrichtung mit der Längsrichtung des Druckrohres entsprechend im Kraftfahrzeug angeordnet.

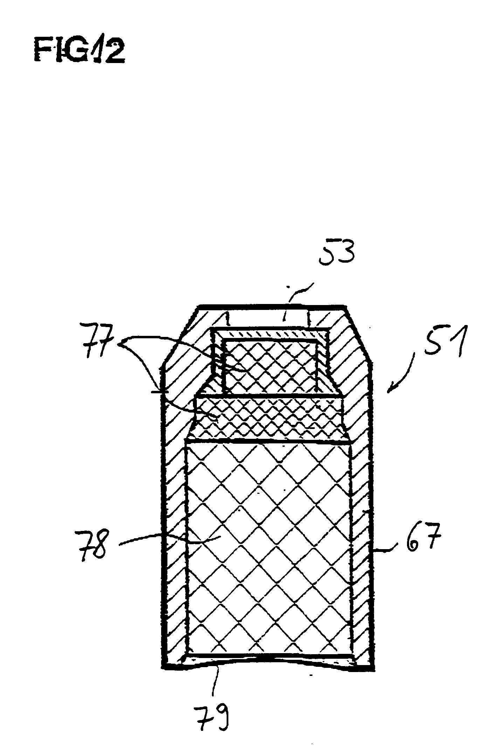

Bei dem in der Fig. 11 dargestellten Ausführungsbeispiel sind ein Projektil 3, ein Druckrohr 4 und ein Führungsrohr 7 koaxial ineinander liegend angeordnet. Das Projektil 3 wird im Druckrohr 4 geführt. Das Druckrohr 4 wird vom äußeren Führungsrohr/Gehäuse 7 geführt. Im Projektil 3 befindet sich als pyrotechnischer Treibsatz ein Gasgenerator 51, der im einzelnen in der Fig.12 dargestellt ist. In der bezüglich der Längsachse A linken Position befindet sich der Gasgenerator 51 in Ruhestellung, und in der bezüglich der Längsachse A rechten Stellung befindet sich der Gasgenerator 51 in der gezündeten Stellung. Der Gasgenerator 51 wird durch eine Sperre, welche in der Fig. 11 durch die in einer Kugelführung 52 geführten Sperrkugel 33 gebildet wird, gehalten. Die Kugelführung 52 ist eine quer zur Längsachse A sich erstreckende zylindrische Bohrung in der zylindrischen Wand des Projektils 3. Diese Bohrung setzt sich fort in der zylindrischen Wand des Druckrohres 4.

Der Gasgenerator 51 ist durch die Feder 26 in der Ruhestellung in Richtung auf den Schlagbolzen 27, der an einer Stirnseite des Projektils 3 befestigt ist, vorgespannt. Der Gasgenerator 51 besitzt an seinem dem Schlagbolzen 27 zugewandten Ende eine Zündplättcheneinrichtung 53. An der entgegengesetzten Stirnseite wirkt auf den Gasgenerator die Feder 26, die im dargestellten Ausführungsbeispiel als Zylinderdruckfeder ausgebildet ist. Die Feder 26 stützt sich an ihrem einen Ende am Projektil 3, und zwar an einer Düsenplatte 54, welche einen stirnseitigen Abschluß des Projektils 3 bildet, ab. Die Düsenplatte 54 liegt entgegengesetzt zu der Stirnseite des Projektils, in welcher der Schlagbolzen 27 angeordnet ist.

Die Düsenplatte 54 enthält eine oder mehrere Düsenöffnungen 56, die in einen Druckraum 55 münden. Der Druckraum 55 wird im Druckrohr 4 gebildet, wobei der Druckraum 55 stirnseitig durch ein Dichtungselement 57 oder an deren Rohrabschluß gasdicht nach außen hin abgedichtet ist. Durch das Dichtungselement ist ein mit dem Projektil 3 verbindbares Zugseil 1 geführt. Ein nicht näher dargestelltes Ende des Zugseiles 1 ist in bekannter Weise mit einem Aufrollautomaten eines Sicherheitsgurtes oder mit einem Teil des Gurtbandes des Sicherheitsgurtes verbunden und dient zur Übertragung der vom Projektil 3 vermittelten Strafferbewegung auf den Sicherheitsgurt.

Bei der in der Fig. 11 dargestellten Ruhestellung befindet sich ein Verankerungsende 58 des Zugseiles 1 in einem bestimmten Abstand von einer Verankerungsstelle 59 in der Düsenplatte 54. Das Verankerungsende 58 besitzt gegenüber dem Durchmesser des Zugseiles 1 einen größeren Durchmesser und kann durch einen Verankerungsnippel, welcher mit dem Zugseil verpreßt ist, gebildet sein. Das Verankerungsende weist ferner einen konusförmigen Verankerungsteil 60 auf, der an die ebenfalls konusförmig ausgebildete Verankerungsstelle 59 in der Düsenplatte 54 angepaßt ist. Das Verankerungsende 58 wird erst nach dem Ansprechen der in die Gasamtanordnung der Vorrichtung integrierten Sensorik mit der Verankerungsstelle 59 in der Düsenplatte 54 gasdicht verankert, wie im einzelnen noch erläutert wird.

Durch die gezeigte Anordnung erreicht man ferner eine Sensorwirkung, welche im Crashfall, d.h. bei überhöhter Fahrzeugbeschleunigung bzw. -abbremsung anspricht. Der zylindrische Mantel des Projektils 3 ist an der Innenwand des Druckrohres 4 geführt. Über den Sperrkörper, d.h. über die Kugel 33 bzw. einen Sperrkegel 61, wird eine Verbindung zwischen dem Druckrohr 4 und dem Projektil 3 hergestellt. D.h. also, der Sperrkörper hält in der dargestellten Ruhestellung nicht nur den vorgespannten Gasgenerator in der blockierten Ruhestellung, sondern stellt auch eine Verbindung zwischen dem Druckrohr 4 und dem Projektil 3 dar für eine gemeinsame Bewegung bei Crashbelastung innerhalb des äußeren Führungsrohres 7. Diese Bewegung des Projektils 3 und des Druckrohrs 4 erfolgt gegen eine Kraftschwelle, die vermittelt sein kann durch Reibschluß zwischen dem Führungsrohr 7 und dem Druckrohr 4, insbesondere an den Führungsflächen 62, welche im dargestellten Ausführungsbeispiel durch Eindrückungen in die Wandung des Führungsrohres/Gehäuses 7 hergestellt sind. Diese Kraftschwelle, welche die Ansprechschwelle der in die Anordnung integrierten Sensorik bildet, kann auch durch ein nicht näher dargestelltes elastisches Rückstellelement, z.B. in Form einer Feder, welche entgegen der axialen Bewegungsrichtung (Teil B) auf das Druckrohr 4 wirkt, erzeugt werden.

Bei Crashbelastung werden beim dargestellten Ausführungsbeispiel das Druckrohr 4 und das Projektil 3 gemeinsam in Richtung des Pfeiles B (axiale Richtung) bewegt, so daß die Sperrkugel 33 in den Bereich eines Freiraumes im äußeren Führungsrohr 7 kommt, der durch eine umlaufende Ausbauchung 63 beim dargestellten Ausführungsbeispiel gebildet wird. Die Kraft der Feder 26 wirkt über eine am Gasgenerator 51 vorgesehene schräge Anlagefläche 64 auf die Sperrkugel 33, so daß die Sperrkugel 33 in den durch die Ausbauchung 63 gebildeten Freiraum gebracht wird.

Bei dem in der Fig. 11 dargestellten Ausführungsbeispiel wird die Sperrkugel 33 zwischen der schrägen Anlagefläche 64 am Gasgenerator 51 und einer Anlagekante 65 am Rand der Ausbauchung 63 im Führungsrohr 7 in der Kugelführung 52 gehalten. Hierdurch wird eine Blockierung der Zündung des Treibgases im Gasgenerator 51 und die auf der linken Seite in der Fig. 11 dargestelte Ruhestellung erreicht.

Wenn durch die Verlagerung der Sperrkugel 33 in den Freiraum der Ausbauchung 63 die Blockierung bzw. Sperre gelöst wird, schlägt die Zündplättcheneinrichtung 53 in der Stirnseite des Gasgenerators 51 durch die Wirkung der Feder 26 auf den Schlagbolzen 27. Der Gasgenerator 51 nimmt dann die in der rechten Darstellung der Fig. 11 gezeigte Position ein. Die axiale Bewegung des Treibgasgenerator 51 im Innenraum des Projektils 3 wird noch dadurch ermöglicht, daß eine Entlüftungsöffnung 66 an der Stirnseite des Projektils 3 mit dem Schlagbolzen 27 vorgesehen ist.

Durch Zündung des Treibsatzes im Gasgenerator 51 wird im Innenraum des Projektils 3 ein hoher Druck ausgebildet. Der Treibgasdruck entweicht durch die Düsenöffnung 56 in der Düsenplatte 54 und treibt das Projektil 3 in axialer Richtung (Pfeil B) im Druckrohr 4 zur Erzeugung der Gurtstrafferbewegung.

Durch den vom Treibgas erzeugten hohen Druck wird der Zylindermantel 67 des Treibgasgenerators, der im Projektil 3 in axialer Richtung beweglich angeordnet ist, gegen die Innenwand des Projektils gedrückt. Hierdurch wird eine zusätzliche Abdichtung des Innenraumes des Projektils 3 nach außen, insbesondere der Kugelführung 52, erreicht. Der vom Treibgas erzeugte Druck ist so hoch, daß die relativ dünne Wand des Mantels 67 des Gasgenerators 51 aufgeweitet wird und gegen die Innenwand des Projektils 3 angedrückt wird, so daß eine gasdichte Anlage der Außenseite des zylindrischen Mantels 67 an die Innenwand des Projektils 3 erreicht wird. Der im Innenraum des Projektils 3 aufgebaute Druck entweicht daher nur durch die Düsenöffnung 56 bzw. Düsenöffnungen 56 in der Düsenplatte 54.

Bei der axialen Bewegung des Projektils 3 wird die konusförmige Verankerungsstelle 59 zum verdickten Verankerungsende 58 des Zugseiles 1 bewegt. Das konusförmige Verankerungsteil 60 wird dabei gasdicht in die konusförmige Verankerungsstelle 59 der Düsenplatte 54 gedrückt. Die Düsenplatte 54 hat somit mehrere Funktionen. Sie dient zur Herstellung einer gasdichten Verankerung zwischen dem Zugseil 1 und dem Projektil 3. Ferner enthält sie die Düsenöffnungen 56, durch welche der Treibgasdruck entweicht und auf diese Weise die Schubkraft für die Strammerbewegung des Projektils 3 erzeugt. Zur Unterstützung der gasdichten Verbindung zwischen dem verdickten Verankerungsende 58 und der Düsenplatte 54 besitzt das Verankerungsende 58 eine ebene Fläche 68, auf die der hohe Treibgasdruck im Innenraum des Projektils 3 zusätzlich wirkt, um den konusförmigen Verankerungsteil 60 in die konusförmige Verankerungsstelle 59 zu drücken.

Zur Erzeugung der Strafferbewegung, welche auf das Zugseil 1 übertragen wird, bewegt sich das Projektil 3 aufgrund der Schubkraft des durch die Düsenöffnungen 56 austretenden Treibgases im Druckrohr 4. Das Druckrohr 4 dient hierbei als Führungsrohr für das Projektil 3. Die Sperrkugel 33 ist soweit in den Freiraum der Ausbauchung 63 bewegt (Pfeil C), daß das Projektil 3 sich ungehindert im Druckrohr 4 in axialer Richtung bewegen Kann. Wie schon erläutert, ist der Innenraum des Projektils 3 nach außen hin abgedichtet dadurch, daß der zylindrische Mantel 67 des Gasgenerators gegen die Innenwand des Projektils 3 gepreßt ist, wodurch die Öffnung der Kugelführung 52 im Projektil 3 gasdicht verschlossen ist, so daß der im Innenraum des Projektils aufgebaute Treibgasdruck vollständig zur Erzeugung der Schubkraft, welche auf das Projektil 3 wirkt, ausgenutzt wird.

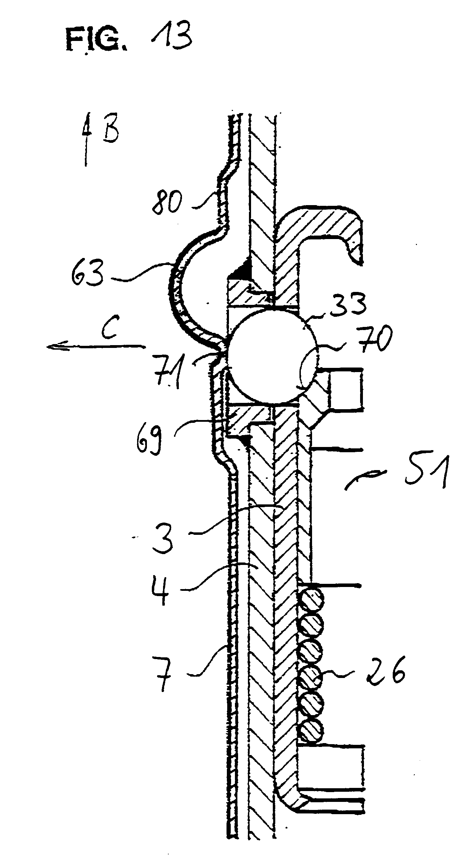

Bei dem in der Fig. 13 dargestellten Ausführungsbeispiel ist in das Druckrohr 4 eine Führungshülse 69 für die Sperrkugel 33 eingeschweißt. Bei dieser Ausführungsform liegt die Sperrkugel 33 an einer Anlagefläche 70, welche der Kugeloberfläche der Sperrkugel 33 angepaßt ist, am Gasgenerator 51 an. Am äußeren Führungsrohr 7 liegt die Sperrkugel 33 im Bereich einer in das Rohrinnere ragenden Eindrückung 71 an. Das Führungsrohr 7 besitzt ferner eine Ausweitung 72, so daß eine Bewegungsmöglichkeit des Druckrohres mit der Führungshülse 65 im Führungsrohr 7 bei Crashbelastung möglich ist.

Die Führungshülse 69 ist aus einem harten Material, beispielsweise Hartsintermaterial, gefertigt, um mit entsprechender Flächenpressung zwischen Hülsenführung und Kugeloberfläche eine ausreichende Dichtung nach außen zu erreichen.

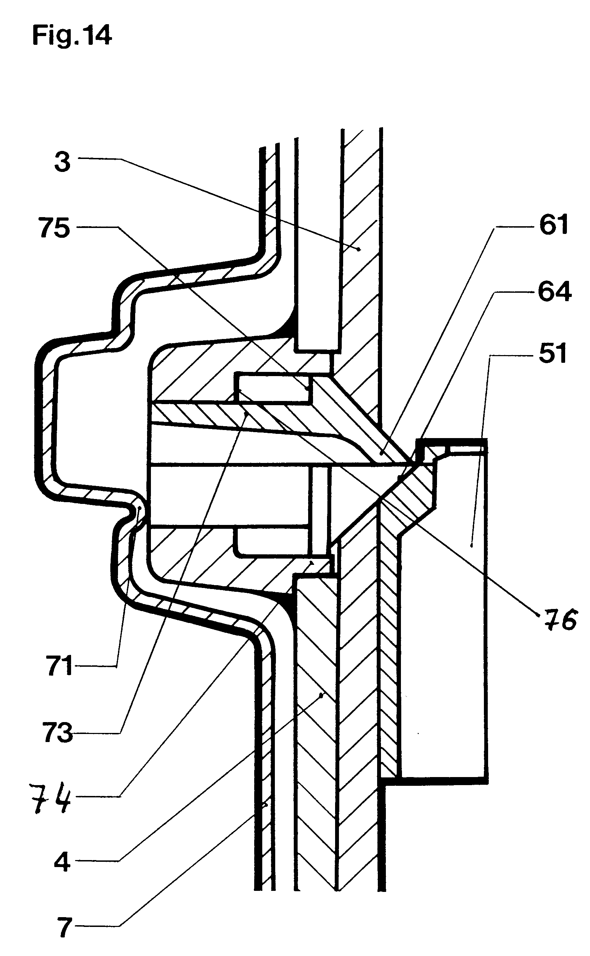

Eine weitere gasdichte Ausführungsform für eine Sperre ist in der Fig. 14 dargestellt. Bei dieser Ausführungsform ist der Sperrkörper als Sperrkeil oder Sperrkegel 61 ausgebildet. Der Sperrkegel 61 liegt an der schrägen Anlagefläche 64 des Gasgenerators 51 an. Der Sperrkegel 61 besitzt einen Schaft 73, der zylindrisch ausgebildet sein kann. Der zylindrisch ausgebildete Schaft ist in einer Führungshülse 74 in seiner axialen Richtung verschiebbar gelagert. Die Führungshülse 74 ist, beispielsweise durch Verschweißen, mit dem Druckrohr 4 verbunden und befindet sich in der Wandung des Druckrohres 4. Wenn sich das Druckrohr 4 im Crashfall zusammen mit der Projektil 3 bei Crashbelastung in axialer Richtung (Pfeil B) bewegt, kommt der Schaft 73 des Sperrkegels außer Eingriff mit dem Vorsprung 71, so daß aufgrund der Kraft der Feder 26, welche auf den Gasgenerator 51 wirkt, der Sperrkegel in der Fig. 14 nach links (Pfeilrichtung C) in der Hülse 74 verschoben wird. Der Sperrkegel 61 wird in der Hülse 74 soweit verschoben, daß er mit seiner Unterseite 75 gegen eine Anschlagfläche 76 an der Führungshülse 74 angedrückt wird. Durch die aneinander liegenden Flächen 75 und 76 sowie durch die aneinander liegenden Flächen der Innenwand der Hülse 74 und des Schaftes 73 wird eine Labyrinthdichtung erreicht, die eine gasdichte Ausbildung der dargestellten Sperreinrichtung bewirkt.

Der in der Fig. 12 dargestellte Gasgenerator 51 besitzt an seiner einen dem Schlagbolzen 27 zugewendeten Stirnseite das Zündplättchen 53 sowie eine zwischen den Zündplättchen 53 in bekannter Weise ausgebildete Temperaturkette 77, welche bei Zündung des Zündplättchens für eine Temperaturerhöhung sorgt, die auf das letztlich zu zündende Treibmittel 78 im Inneren des Gasgenerators einwirkt. Die andere Stirnseite des Gasgenerators ist mit einem Versiegelungslack verschlossen, der sich beim Zünden des Treibmittels 78 und dem im Innenraum des Projektils vorhandenen Luftsauerstoff zu einem Treibgasgemisch verbindet, das den erforderlichen Überdruck aufbaut, welcher beim Entweichen durch die Düsen 56 für die erforderliche Schubkraft bei der Strafferbewegung sorgt.

Bei dem in der Fig. 11 dargestellten Ausführungsbeispiel ist der Schlagbolzen 27 als Schraube ausgebildet, die in eine entsprechende Öffnung in der Stirnseite des Projektils 3 einschraubbar ist. Das kegelige in den Innenraum des Projektils 3 ragende Ende des Schraubbolzens bildet den Zündanschlag für das Zündplättchen 53 im Gasgenerator 51. Beim Zusammenbau von Druckrohr 4 und Projektil 3 sowie der Sperre (Kugel 33 oder Sperrkegel 61) und Einsetzen dieser Einrichtung in das äußere Führungsrohr 7, welches als zweischaliges Führungsrohr ausgebildet sein kann, ist die als Schlagbolzen wirkende Schraube 27 entfernt, so daß es zu keiner Zündung kommen kann und das Ansprechverhalten der in dieser Anordnung integrierten Sensorik überprüft werden kann. Die Schraube 27 wird dann nach Beendigung der Montage eingesetzt. Solange die Schraube 27 in das Projektil 3 nicht eingesetzt ist, ist die Gesamtanordnung gegen Zündung gesichert. Die Anordnung wird erst dann entsichert, wenn der Schlagbolzen 27 eingeschraubt ist.

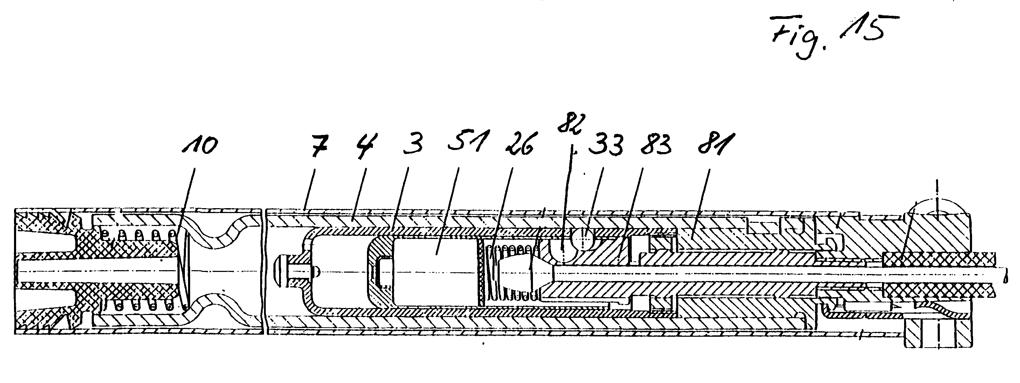

Aus der Figur 15 geht eine Ausführungsform der erfindungsgemäßen Rückstrammervorrichtung hervor, bei der eine zusätzliche Sensormasse 81 am Druckrohr 4 und/oder dem Projektil 3, an der entgegen der Rückstrammbewegung des Zugseiles 1 gelegenen Seite, angreift. Dadurch wird die Ansprechempfindlichkeit und -geschwindigkeit sowie die Zuverlässigkeit erhöht.

Weiterhin befindet sich die Kugel 33, die den Zündmechanismus sperrt, wie bereits beschrieben in Sperrstellung in einer Aussparung des Druckrohres 4. Der Zündmechanismus wird jedoch auf einer anderen Seite durch das Hineinragen der Kugel 33 in den flacheren Teil einer zweistufigen Vertiefung 82 eines Sensorträgers 83 gehalten. Im Crashfall wird die Sensormasse 81 gemeinsam mit dem Druckrohr 4 infolge ihrer Trägheit ausgelenkt. Dabei schiebt das Druckrohr 4 die Kugel 33 in den tieferen Teil der Vertiefung 82 im Sensorträger 83, und der Zündmechanismus zur Auslösung des Systems wird freigegeben.

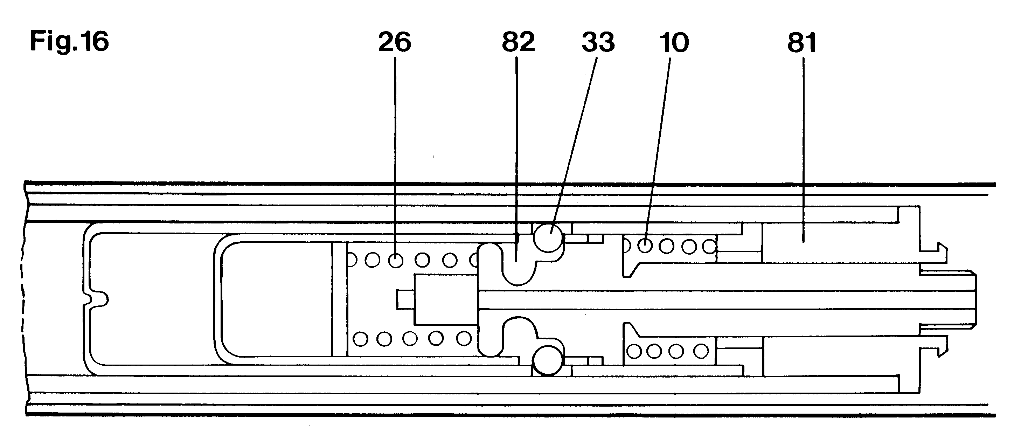

Die in der Fig. 16 dargestellte Ausführungsform unterscheidet sich von der vorangestellten nur dadurch, daß die Sensorfeder 10 zwischen der zusätzlichen Sensormasse 81, dem Druckrohr 4 und/oder dem Projektil 3 angeordnet ist. Außerdem ist die Sensormasse 81 integrierter Bestandteil der Führung des Zugseiles 1, und die Vertiefung 82 ist als umlaufende Nut im Sensorträger 83 ausgeführt. Im übrigen können auch bei dieser Konstruktion Reibflächen, die der Bewegung des Sensorträgers 83 entgegen wirken, vorgesehen sein, und damit die Auslösekraft beeinflußt werden.

## Patentansprüche

1. Rückstrammervorrichtung zum Straffen eines Sicherheitsgurtes in einem Kraftfahrzeug mit einem pyrotechnischen Treibsatz (2, 5; 51), einer Zündeinrichtung für den Treibsatz (2, 5; 51), einem mit dem Sicherheitsgurt verbundenen Zugmittel (1), auf das durch den gezündeten Treibsatz (2, 5; 51) eine Zugbewegung zum Straffen des Sicherheitsgurtes übertragen wird, einer Sensoreinrichtung mit einer Sensormasse, die bei überhöhter Beschleunigung oder Abbremsung des Fahrzeuges aus einer Sperrstellung in eine Freigabestellung bewegbar ist, in welcher ein Schlagbolzen (11; 27; 40) und der Treibsatz (2, 5; 51) zur Zündung des Treibsatzes (2, 5; 51) aufeinander zu bewegt werden, einem durch den Treibsatz antreibbaren Projektil (3), das mit dem Zugmittel (1) verbunden ist, und einem Druckrohr (4), in welchem das Projektil (3) geführt ist,
dadurch **gekennzeichnet,**
daß das Druckrohr (4) integrierter Bestandteil der beweglichen Sensormasse ist, und daß der Schlagbolzen (11; 27; 40) sowie der Treibsatz (2, 5; 51) am als Sensormasse beweglichen Druckrohr (4) gelagert sind.

2. Rückstrammervorrichtung nach Anspruch 1,
dadurch gekennzeichnet, daß das Druckrohr (4) gegen die Kraft einer Sensorfeder (10) beweglich geführt ist.

3. Rückstrammervorrichtung nach Anspruch 1 und 2,
dadurch gekennzeichnet, daß das Druckrohr (4) in Richtung seiner Längsausdehnung gegen die Kraft der Sensorfeder (10) beweglich geführt ist.

4. Rückstrammervorrichtung nach Anspruch 1 und 2,
dadurch gekennzeichnet, daß das Druckrohr (4) in einem Gehäuse (7) quer zu seiner Längsausdehnung beweglich geführt ist.

5. Rückstrammervorrichtung nach Anspruch 4,
dadurch gekennzeichnet, daß das Druckrohr (4), um eine Pendelachse (6), als Teil einer Pendelmasse, orthogonal zu seiner Längsachse drehbar gelagert ist.

6. Rückstrammervorrichtung nach einem der Ansprüche 1 bis 5,
dadurch gekennzeichnet, daß das in einem Gehäuse (7) bewegbare Druckrohr (4) im Normalfall in einer Stellung gehalten ist, in welcher eine Sperreinrichtung (8; 33) die Zündeinrichtung gegen die Kraft einer Druckfeder (26) hält.

7. Vorrichtung nach einem der Ansprüche 1 bis 6,
dadurch gekennzeichnet, daß die Sperreinrichtung eine Kugel (33) ist, die mit einer schrägen Fläche in die seitliche Öffnung des Druckrohres (4) hineinragt.

8. Rückstrammervorrichtung nach Anspruch 1 bis 6,
dadurch gekennzeichnet, daß die Zündeinrichtung einen Schlagbolzen (11) aufweist, der in Bereitstellung gegen die Kraft einer Zündfeder (12) mit dem Sperrteil an einer Eingriffstelle (13; 14) in Eingriff liegt, wobei die Eingriffstelle (13; 14) zwischen dem Sperrteil und dem Schlagbolzen (11) durch eine schräg verlaufende Anschlagfläche (13) am Schlagbolzen (11) in der Weise gebildet ist, daß die Zündfeder (12) eine das Sperrteil (8) und den Schlagbolzen (11) voneinander trennende Kraftkomponente ausübt.

9. Rückstrammervorrichtung nach Anspruch 1 bis 8,
dadurch gekennzeichnet, daß vor der Montage der Rückstrammervorrichtung am Fahrzeug die Bewegung des Druckrohres (4) durch eine Sicherheitseinrichtung (15-18), die bei der Montage der Rückstrammervorrichtung am Fahrzeug automatisch entriegelbar ist, gesichert ist.

10. Rückstrammervorrichtung nach Anspruch 1 bis 9,
dadurch gekennzeichnet, daß das Projektil (3) in seinem Innenraum einen den Treibsatz enthaltenden Gasgenerator (51) aufweist, der nach gezündetem Treibsatz im Innenraum des Projektils (3) ein Druckgas erzeugt, und daß das Projektil (3) eine oder mehrere Düsenöffnungen (56) aufweist, durch welche das Druckgas für den Projektilantrieb austritt.

11. Rückstrammervorrichtung nach Anspruch 1 bis 10,
dadurch gekennzeichnet, daß die Düsenöffnung oder -öffnungen (56) in einen Druckraum (55) mündet bzw. münden, der im Druckrohr (4) gebildet ist, welcher als Führung für das Projektil (3) dient.

12. Rückstrammervorrichtung nach Anspruch 1,
dadurch gekennzeichnet, daß das Projektil (3) als weiterer Bestandteil einer Sensormasse mit dem Druckrohr (4) bei Crashbelastung mit bewegt ist.

13. Rückstrammervorrichtung nach Anspruch 1 bis 12,
dadurch gekennzeichnet, daß eine die Zündeinrichtung in Ruhestellung blockierende Sperre (33) im Gehäuse (7) vorgesehen ist, welche durch die Bewegung von Druckrohr (4) und/oder Projektil (3) lösbar ist.

14. Rückstrammervorrichtung nach Anspruch 1 bis 13,
dadurch gekennzeichnet, daß die Zündeinrichtung einen Schlagbolzen (27) und eine Zündplättcheneinrichtung (77) aufweist, welche durch die Kraft einer Feder (26) bei gelöster Sperre (33) gegeneinander bewegbar sind.

15. Rückstrammervorrichtung nach Anspruch 1 bis 14,
dadurch gekennzeichnet, daß der Gasgenerator (51) einen zylindrischen Mantel (67) aufweist, der durch den Treibgasdruck nach außen gegen die Innenwand des Projektils (3) andrückbar ist.

16. Rückstrammervorrichtung nach einem der Ansprüche 1, 2, 3, 6 und 9 bis 15,
dadurch gekennzeichnet, daß die Sperre durch einen in einer Ausnehmung (52) des Projektils (3) beweglich gelagerten Sperrkörper (33) gebildet ist, der in der Ruhestellung in den Innenraum des Projektils (3) ragt und bei der durch Crashbelastung verursachten Bewegung des Druckrohres (4) und/oder Projektils (3) durch die Wirkung der Feder (26) bewegbar ist.

17. Rückstrammervorrichtung nach einem der Ansprüche 1, 2, 3, 6 und 9 bis 16,
dadurch gekennzeichnet, daß das Druckrohr (4) zum Teil durch Reibschluß mit dem Führungsrohr (7) in der Ruhelage gehalten ist.

18. Rückstrammervorrichtung nach einem der Ansprüche 1, 2, 3, 6 und 9 bis 17,
dadurch gekennzeichnet, daß eine Sensormasse (81) im Führungsrohr (7) am Druckrohr (4) und/oder Projektil (3) angreift.

## Claims

1. A tightening device for tensioning a safety belt in a motor vehicle comprising a pyrotechnic propellant (2, 5; 51), a firing device for the propellant (2, 5; 51), a pulling means (1) which is connected to the safety belt and to which a pulling movement is transmitted by the fired propellant (2, 5; 51) for tensioning the safety belt, a sensor device with a sensor ass which upon excessive acceleration or deceleration of the vehicle is movable from a locking position into a release position in which a striker pin (11; 27; 40) and the propellant (2, 5; 51) are moved towards each other for firing of the propellant (2, 5; 51), a projectile (3) which is drivable by the propellant and which is connected to the pulling bans (1), and a pressure tube (4) in which the projectile (3) is guided, characterised in that the pressure tube (4) is an integrated component of the movable sensor mass, and that the striker pin (11; 27; 40) and the propellant (2, 5; 51) are mounted on the pressure tube (4) which is movable as the sensor mass.

2. A tightening device according to claim 1 characterised in that the pressure tube (4) is guided movably against the force of a sensor spring (10).

3. A tightening device according to claim 1 and claim 2 characterised in that the pressure tube (4) is guided movably in the direction of its longitudinal extent against the force of the sensor spring (10).

4. A tightening device according to claim 1 and claim 2 characterised in that the pressure tube (4) is guided movably in a housing (7) transversely to its longitudinal extent.

5. A tightening device according to claim 4 characterised in that the pressure tube (4) is mounted rotatably orthogonally to its longitudinal axis about a pendulum axis (6) as part of a pendulum mass.

6. A tightening device according to one of claims 1 to 5 characterised in that in the normal situation the pressure tube (4) which is movable in a housing (7) is held in a position in which a locking device (8; 33) holds the firing device against the force of a compression spring (26).

7. A device according to one of claims 1 to 6 characterised in that the locking device is a bell (33) which projects with an inclined surface into the lateral opening of the pressure tube (4).

8. A tightening device according to claims 1 to 6 characterised in that the firing device has a striker pin (11) which in the readiness position is in engagement against the force of a firing spring (12) with the locking member at an engagement location (13; 14), wherein the engagement location (13; 14) between the locking member and the striker pin (11) is formed by an inclinedly extending abutment surface (13) on the striker pin (11), in such a way that the firing spring (12) exerts a force component for separating the locking member (8) and the striker pin (11) from each other.

9. A tightening device according to claims 1 to 8 characterised in that prior to mounting of the tightening device on the vehicle the movement of the pressure tube (4) is blocked by a safety device (15-18) which can be automatically unlocked upon mounting of the tightening device on the vehicle.

10. A tightening device according to claims 1 to 9 characterised in that in its interior the projectile (3) has a gas generator (51) which contains the propellant and which after the propellant has been fired generates a pressure gas in the interior of the projectile (3), and that the projectile (3) has one or more nozzle openings (56) through which the pressure gas issues for driving the projectile.

11. A tightening device according to claims 1 to 10 characterised in that the nozzle opening or openings (56) opens or open into a pressure space (55) which is formed in the pressure tube (4) which serves as a guide means for the projectile (3).

12. A tightening device according to claim 1 characterised in that the projectile (3) is also moved with the pressure tube (4) as a further component of a sensor mass in the event of a crash loading.

13. A tightening device according to claims 1 to 12 characterised in that there is provided a locking means (33) in the housing (7), which blocks the firing device in the rest position and which is releasable by the movement of the pressure tube (4) and/or projectile (3).

14. A tightening device according to claims 1 to 13 characterised in that the firing device has a firing pin (27) and a firing plate device (77), which are movable towards each other by the force of a spring (26) when the locking means (33) is released.

15. A tightening device according to claims 1 to 14 characterised in that the gas generator (51) has a cylindrical casing (67) which can be pressed outwardly against the inside wall of the projectile (3) by the propellant gas pressure.

16. A tightening device according to one of claims 1, 2, 3, 6 and 9 to 15 characterised in that the locking means is formed by a locking body (33) which is mounted movably in an opening (52) in the projectile (3) and which in the rest position projects into the interior of the projectile (3) and is movable by the force of the spring (26) upon the movement of the pressure tube (4) and/or projectile (3), which is caused by a crash loading.

17. A tightening device according to one of claims 1, 2, 3, 6 and 9 to 16 characterised in that the pressure tube (4) is partly held in the rest position by frictional engagement with the guide tube (7).

18. A tightening device according to one of claims 1, 2, 3, 6 and 9 to 17 characterised in that a sensor mass (81) in the guide tube (7) engages the pressure tube (4) and/or projectile (3).

## Revendications

1. Enrouleur-dérouleur pour tendre une ceinture de sécurité dans un véhicule automobile, avec une charge propulsive pyrotechnique (2, 5; 51), avec un système d'allumage pour la charge propulsive (2, 5; 51), avec un moyen de traction (1), relié à la ceinture de sécurité et auquel la charge propulsive enflammée (2, 5; 51) transmet un mouvement de traction pour tendre la ceinture de sécurité, avec un système détecteur muni d'une masse détectrice qui peut être amenée, en cas d'accélération ou de freinage surélevés du véhicule, d'une position de verrouillage dans une position de déblocage, dans laquelle un percuteur (11; 27; 40) et la charge propulsive (2, 5; 51) sont déplacés l'un vers l'autre pour l'allumage de la charge propulsive (2, 5; 51), avec un projectile (3), entraînable par la charge propulsive et relié au moyen de traction (1), et avec un tube de pression (4), dans lequel est guidé le projectile (3), caractérisé en ce que le tube de pression (4) fait partie intégrante de la masse détectrice mobile, et en ce que le percuteur (11; 27; 40), ainsi que la charge propulsive (2, 5; 51), sont montés sur le tube de pression mobile (4), en tant que masse détectrice.

2. Enrouleur-dérouleur suivant la revendication 1, caractérisé en ce que le tube de pression (4) est mobile et guidé contre la force d'un ressort détecteur (10).

3. Enrouleur-dérouleur suivant les revendications 1 et 2, caractérisé en ce que le tube de pression (4) est mobile et guidé, dans le sens de son extension longitudinale, contre la force du ressort détecteur (10).

4. Enrouleur-dérouleur suivant les revendications 1 et 2, caractérisé en ce que le tube de pression (4) est mobile et guidé dans un boîtier (7), à la transversale de son extension longitudinale.

5. Enrouleur-dérouleur suivant la revendication 4, caractérisé en ce que le tube de pression (4) est monté avec une possibilité de rotation, à la perpendiculaire de son axe longitudinal, autour d'un axe oscillant (6), en tant que partie d'une masse pendulaire.

6. Enrouleur-dérouleur suivant l'une quelconque des revendications 1 à 5, caractérisé en ce que le tube de pression (4), mobile dans un boîtier (7), est normalement maintenu dans une position, dans laquelle un système de verrouillage (8; 33) maintient le système d'allumage, contre la force d'un ressort de pression (26).

7. Dispositif suivant l'une quelconque des revendications 1 à 6, caractérisé en ce que le système de verrouillage est une bille (33), qui pénètre par une surface oblique dans l'ouverture latérale du tube de pression (4).

8. Enrouleur-dérouleur suivant les revendications 1 à 6, caractérisé en ce que le système d'allumage présente un percuteur (11) en prise, en position d'attente, avec l'élément d'arrêt sur un point de prise (13; 14), contre la force d'un ressort d'allumage (12), le point de prise (13; 14) entre l'élément d'arrêt et le percuteur (11) étant formé par une surface de contact oblique (13) sur le percuteur (11), de sorte que le ressort d'allumage (12) exerce une composante de force, qui sépare l'un de l'autre l'élément d'arrêt (8) et le percuteur (11).

9. Enrouleur-dérouleur suivant les revendications 1 à 8, caractérisé en ce que, avant le montage de l'enrouleur-dérouleur sur le véhicule, le déplacement du tube de pression (4) est bloqué par un système de sécurité (15 - 18), déverrouillable automatiquement lors du montage de l'enrouleur-dérouleur sur le véhicule.

10. Enrouleur-dérouleur suivant les revendications 1 à 9, caractérisé en ce que le projectile (3) présente dans son espace interne un générateur de gaz (51), comportant la charge propulsive, qui produit un gaz sous pression dans l'espace interne du projectile (3), après l'allumage de la charge propulsive, et en ce que le projectile (3) présente un ou plusieurs orifices d'injection (56), au travers desquels s'échappe le gaz sous pression pour l'entraînement du projectile.

11. Enrouleur-dérouleur suivant les revendications 1 à 10, caractérisé en ce que l'orifice ou les orifices d'injection (56) débouche et/ou débouchent dans un compartiment de pression (55) réalisé dans le tube de pression (4), qui sert de guidage pour le projectile (3).

12. Enrouleur-dérouleur suivant la revendication 1, caractérisé en ce que le projectile (3), en tant qu'autre partie intégrante d'une masse détectrice, est déplacé avec le tube de pression (4) sous l'effet d'une charge accidentelle.

13. Enrouleur-dérouleur suivant les revendications 1 à 12, caractérisé en ce qu'un verrouillage (33), bloquant le système d'allumage en position de repos, est prévu dans le boîtier (7), ce verrouillage pouvant être débloqué par le déplacement du tube de pression (4) et/ou du projectile (3).

14. Enrouleur-dérouleur suivant les revendications 1 à 13, caractérisé en ce que le système d'allumage présente un percuteur (27) et un système d'amorces fulminantes (77), qui peuvent être amenés l'un contre l'autre par la force d'un ressort (26), en position de déblocage du verrouillage (33).

15. Enrouleur-dérouleur suivant les revendications 1 à 14, caractérisé en ce que le générateur de gaz (51) présente une enveloppe cylindrique (67), qui peut être pressée vers l'extérieur contre la paroi interne du projectile (3), sous l'effet de la pression du gaz propulseur.

16. Enrouleur-dérouleur suivant l'une quelconque des revendications 1, 2, 3, 6 et 9 à 15, caractérisé en ce que le verrouillage est formé par un corps d'arrêt (33) mobile, logé dans un évidement (52) du projectile (3), pénétrant en position de repos dans l'espace interne du projectile (3), et pouvant être déplacé sous l'effet du ressort (26), en cas de déplacement, provoqué par une charge accidentelle, du tube de pression (4) et/ou du projectile (3).

17. Enrouleur-dérouleur suivant l'une quelconque des revendications 1, 2, 3, 6 et 9 à 16, caractérisé en ce que le tube de pression (4) est maintenu en position de repos, en partie par force de friction avec le tube de guidage (7).

18. Enrouleur-dérouleur suivant l'une quelconque des revendications 1, 2, 3, 6 et 9 à 17, caractérisé en ce qu'une masse détectrice (81), prévue dans le tube de guidage (7), attaque le tube de pression (4) et/ou le projectile (3).
